# FASCICULE DE BREVET EUROPEEN

(11) **EP 3 941 192 B1**
(45) Date de publication et mention de la délivrance du brevet: **07.06.2023**
(21) Numéro de dépôt: 20710529.7
(22) Date de dépôt: 16.03.2020
(51) Int. Cl.: A01K 5/01, A01K 15/02

(54) **DISPOSITIF DE DISTRIBUTION D'ALIMENTS AUX ANIMAUX**
VORRICHTUNG ZUM VERTEILEN VON NAHRUNGSMITTELN AUF TIERE
DEVICE FOR DISTRIBUTING FOOD TO ANIMALS

(30) Priorité: 18.03.2019 FR 1902785
(43) Date de publication de la demande: 26.01.2022
(73) Titulaire: Pipolino, 06270 Villeneuve-Loubet (FR)
(72) Inventeur: LESCROART, Pascal, 06270 VILLENEUVE-LOUBET (FR)
(74) Mandataire: Decobert, Jean-Pascal
(86) Numéro de dépôt international: PCT/EP2020/057093
(87) Numéro de publication internationale: WO 2020/187833

(56) Documents cités:
- WO-A1-02/01942
- DE-U1- 29 700 720
- DE-U1-202015 106 709

## Description

### DOMAINE TECHNIQUE

L'invention concerne le domaine des distributeurs d'aliments pour les animaux domestiques. Elle trouve pour application particulièrement avantageuse la distribution des aliments, notamment des aliments secs (granulés, graines, flocons, son, farines) pour les animaux domestiques, et en particulier pour les animaux de compagnie.

### ÉTAT DE LA TECHNIQUE

Il existe plusieurs types de dispositifs permettant la distribution d'aliments aux animaux. Les distributeurs d'aliments sont souvent immobiles, présentant un réservoir contenant ces aliments lesquels sont distribués dans une gamelle par actionnement d'un utilisateur.

Or, il est connu que les animaux, de préférence les animaux domestiques ont besoin d'effectuer des efforts physiques pour rester en bonne santé et en forme. Ils sont malheureusement bien plus souvent attirés par la nourriture que par de l'exercice physique.

La publication brevet WO 02/01942 A1 divulgue un distributeur de nourriture pour bestiaux, de manière dosée.

La publication brevet DE 20 2015 106709 U1 montre un jouet pour animaux présentant un volume central délimité par une paroi cylindrique percée d'ouvertures.

Le brevet EP1887857B1 propose une solution visant à permettre aux animaux domestiques de faire de l'exercice afin de distribuer les aliments contenus dans un distributeur d'aliments.

En effet, le brevet EP1887857B1 divulgue un distributeur d'aliments mobile. L'animal peut faire rouler ce distributeur sur le sol afin de libérer les aliments par des orifices situés sur la paroi du distributeur. Ainsi l'animal réalise de l'exercice tout en distribuant sa nourriture sur le sol.

Cependant, cette solution limite le diamètre et la forme des granulés au diamètre et à la forme des orifices tels que décrits par le brevet EP1887857B1. Or il est connu que selon le type d'animal, le poids de l'animal, son régime alimentaire, les granulés ne sont pas tous de même taille ou de même forme.

Un objet de la présente invention est donc de proposer un dispositif roulant permettant d'améliorer les diamètres et les formes des orifices du dispositif afin d'adapter le dispositif à plusieurs types de granulés.

En effet, la présente invention, permet d'obliger l'animal à un effort physique pour déplacer le dispositif et obtenir les aliments.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, la présente invention prévoit un dispositif pour distribuer au moins un aliment aux animaux comprenant les caractéristiques techniques de la revendication indépendante 1.

Ainsi, la présente invention propose un dispositif présentant une alternative à la variation d'une surface de passage entre le volume de stockage et l'extérieur du dispositif. En effet, elle propose une mobilité relative en translation d'un manchon par rapport à l'autre. Cette alternative est simple d'utilisation et fiable.

La présente invention concerne aussi un procédé de réglage de la surface de recouvrement du dispositif, conformément à la revendication indépendante 6, comprenant successivement au moins les étapes suivantes :
- translation relative du manchon interne et du manchon externe le long de l'axe longitudinal de sorte à atteindre une position correspondant à un niveau souhaité de surface de recouvrement,
- immobilisation du manchon externe dans ladite position.

Cela permet à l'utilisateur de régler la surface de passage à sa convenance.

Ainsi, en utilisant le procédé de réglage de la surface de recouvrement, l'utilisateur peut très facilement et de façon fiable positionner le manchon externe par rapport au manchon interne de façon à obtenir la surface de recouvrement souhaitée. Ainsi il est facile pour l'utilisateur d'adapter la surface de recouvrement du dispositif en fonction de paramètres tel que la forme des aliments, la taille des aliments, le type d'animal, le régime alimentaire de l'animal etc.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue éclatée du dispositif selon un mode de réalisation de l'invention.
La figure 2 représente une première vue en coupe du dispositif de la figure 1.
La figure 3 représente une seconde vue en coupe du dispositif de la figure 1.
La figure 4 représente une vue inclinée en écorché du dispositif de la figure 1.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques selon l'invention, ainsi que des caractéristiques optionnelles qui peuvent éventuellement être utilisées en association ou alternativement :

Selon l'invention, le dispositif comprend un manchon supplémentaire creux, s'étendant le long de l'axe longitudinal et présentant une surface interne et une surface externe, ladite surface externe définissant une troisième paroi latérale présentant une troisième pluralité d'orifices, et dans lequel le manchon supplémentaire est mobile en rotation relativement à au moins l'un parmi le manchon interne et le manchon externe de telle manière à faire varier une surface de recouvrement de la troisième pluralité d'orifices sur la première pluralité d'orifices et/ou la deuxième pluralité d'orifices.
Cela permet de faire varier le diamètre des orifices et d'obtenir plus de précision dans le choix du diamètre des orifices.

Selon l'invention, le manchon interne s'étend le long de l'axe longitudinal au sein du manchon supplémentaire de manière à être coaxial au manchon supplémentaire, le manchon supplémentaire s'étend le long de l'axe longitudinal au sein du manchon externe de manière à être coaxial au manchon externe,
de telle manière à ce que l'ordre de disposition des manchons en partant du volume de stockage jusqu'à l'extérieur du dispositif est le suivant : manchon interne, manchon supplémentaire et manchon externe.
- Avantageusement, le dispositif présente un élément de guidage en rotation et un élément de guidage de la translation.
   Cela permet de faciliter la manipulation du dispositif par l'utilisateur afin de régler le dispositif, en particulier la translation relatif et la rotation relatif d'au moins deux manchons du dispositif.
- Avantageusement, l'élément de guidage de la translation comprend une lumière disposée sur l'un parmi le manchon externe et le manchon supplémentaire, et une encoche disposée sur l'autre de telle manière à ce que l'encoche soit destinée à se déplacer librement dans la lumière.
   Cela permet de guider l'utilisateur dans la translation relative du manchon externe et du manchon interne.
- Avantageusement, les orifices de la pluralité d'orifices d'au moins un, et de préférence de chaque, manchon sont au moins en partie de forme hexagonale.
   Cela permet que le dispositif soit compatible avec des aliments secs de forme hexagonale et de donner plus de liberté dans les formes possibles de la surface de recouvrement.

Selon l'invention, le dispositif présente un élément de verrouillage de la translation dans au moins deux positions relatives différentes du manchon interne et du manchon externe.
Cela permet de maintenir les deux positions relatives différentes du manchon interne et du manchon externe.
- Avantageusement, l'élément de verrouillage présente une accroche sur l'un parmi le manchon externe et le manchon supplémentaire et une pluralité de crans sur l'autre de telle manière à ce que le manchon externe soit fixé sur le manchon supplémentaire dans une position immobile par le biais de la coopération entre l'accroche et un cran de la pluralité de crans.
- Avantageusement, le procédé de réglage de la surface de recouvrement du dispositif , comprend une étape additionnelle de rotation relative d'un manchon supplémentaire et de l'un parmi le manchon interne et le manchon externe de telle manière à faire varier une surface de recouvrement de la troisième pluralité d'orifices sur la première pluralité d'orifices et/ou la deuxième pluralité d'orifices.
   Cela permet à l'utilisateur d'avoir encore plus de liberté pour régler la surface de passage à sa convenance.
- Avantageusement, la surface de passage entre le volume de stockage et l'extérieur du dispositif est définie par la combinaison de la rotation relative du manchon supplémentaire et de l'un parmi le manchon externe et le manchon interne et de la translation relative selon l'axe longitudinal du manchon externe et du manchon interne. Cela permet à l'utilisateur de disposer d'une gamme assez large de configurations possibles du dispositif.

On entend par « surface de recouvrement » une somme de surfaces de recouvrement élémentaires, ladite surface de recouvrement élémentaire étant propre à la surface de recouvrement de chaque orifice de la pluralité d'orifices.

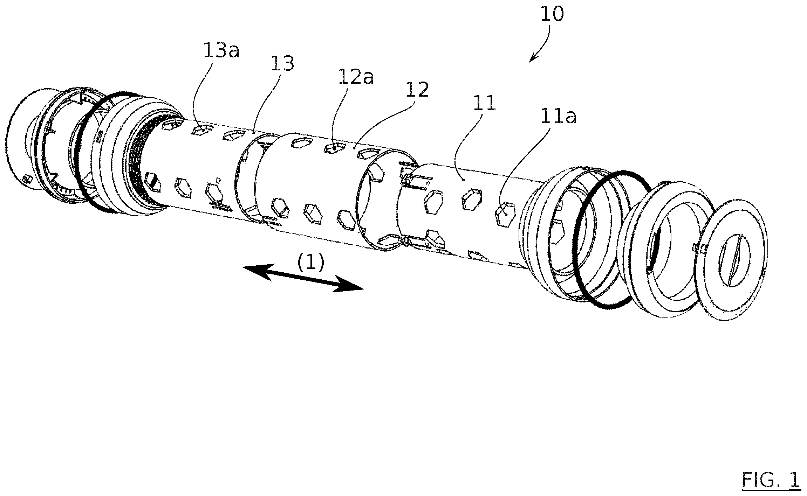

La présente invention décrit un dispositif 10 pour distribuer au moins un aliment, de préférence une quantité suffisante d'aliments nécessaire à la satiété de l'animal. Les aliments sont en général des aliments secs, de préférence en granulés, comme par exemple des croquettes pour animaux. Le dispositif 10 comprend au moins deux manchons 11, 12, de préférence trois manchons 11, 12, 13 tel que représenté sur la figure 1.

Dans le cas non couvert par l'invention où le dispositif 10 comprend seulement deux manchons 11,12, le dispositif 10 comprend alors un manchon interne 11 creux et un manchon externe 12 creux. Le manchon interne 11 et le manchon externe 12 présentent chacun une surface interne 110, 120 et une surface externe 111, 121. La surface interne 110 du manchon interne 11 délimite un volume de stockage 100. Ce volume de stockage 100 est configuré pour recevoir au moins un aliment. En effet, l'au moins un aliment destiné à nourrir l'animal est contenu dans ce volume 100. De préférence, le volume occupé par l'au moins un aliment est égal au volume de stockage 100. De manière alternative, le volume occupé par l'au moins un aliment est adapté par l'utilisateur en fonction des besoins nutritionnels de l'animal, le volume occupé par l'aliment est alors inférieur au volume de stockage 100. Ainsi, avec le même dispositif 10, l'utilisateur peut fournir une quantité désirée d'aliments dans le volume de stockage 100. De plus, la surface externe 111 du manchon interne 11 et la surface externe 121 du manchon externe 12 définissent respectivement une première paroi latérale 112 et une deuxième paroi latérale 122. La première paroi latérale 112 présente une première pluralité d'orifices 11a débouchant dans le volume de stockage 100. La deuxième paroi latérale 122 présente une deuxième pluralité d'orifices 12a. Le manchon interne 11 s'étend le long d'un axe longitudinal 1 au sein du manchon externe 12 de manière à être coaxial au manchon externe 12. De préférence, la surface interne 120 du manchon externe 12 est au contact de la surface externe 111 du manchon interne 11.

Le manchon externe 12 et le manchon interne 11 présente une mobilité relative. Cette mobilité relative comprend une translation le long de l'axe longitudinal 1. De manière avantageuse, le manchon externe 12 est mis en mouvement par rapport au manchon interne 11. Cette mobilité relative est configurée pour définir une surface de recouvrement 20 variable de la deuxième pluralité d'orifices 12a sur la première pluralité d'orifices 11a. La variation de ladite surface de recouvrement 20 engendre une surface de passage 20' variable entre le volume de stockage 100 et l'extérieur du dispositif 10. La surface de recouvrement 20 et la surface de passage 20' sont respectivement définies comme la somme élémentaire de chaque surface de recouvrement 20 et de chaque surface de passage 20' d'un seul orifice de la deuxième pluralité 12a sur la première pluralité 11a. Ainsi, la mobilité relative d'un manchon 11 ou 12 par rapport à l'autre permet de faire varier la surface de passage 20' entre le volume de stockage 100 et l'extérieur du dispositif 10. Ainsi, selon la forme de l'au moins un aliment contenu dans le volume de stockage 100, il est possible pour l'utilisateur de régler la forme et la taille de la surface de passage 20', laquelle permet à l'au moins un aliment de s'échapper du dispositif 10 lorsque l'animal fait rouler le dispositif 10.

De manière très avantageuse, la première pluralité d'orifices 11a et la deuxième pluralité d'orifices 12a sont configurées de telle manière à ce qu'il existe une position dite position active dans laquelle chaque orifice de la deuxième pluralité 12a est entièrement superposée avec un orifice de la première pluralité 11a, et à ce qu'il existe une position dite position passive, dans laquelle aucun orifice de la deuxième pluralité 12a ne recouvre un orifice de la première pluralité 11a. De plus, il existe une pluralité, voire une infinité de positions comprises entre la position passive et la position active, dans lesquelles la deuxième pluralité d'orifices 12a recouvre partiellement la première pluralité d'orifices 11a de sorte à atteindre une position correspondant à un niveau souhaité de surface de recouvrement 20. Ainsi l'utilisateur est libre de configurer la surface de recouvrement 20 comme il le souhaite.

De manière alternative, la première pluralité 11a et la deuxième pluralité 12a sont configurées de telle manière à ce qu'il n'existe aucune position dans laquelle l'ensemble des orifices de la deuxième pluralité 12a recouvre entièrement l'ensemble des orifices de la première pluralité 11a. Cela permet que seulement certains orifices aient une surface de recouvrement élémentaire 20 engendrant une surface de passage élémentaire 20', d'autres orifices n'ayant pas de surfaces de passage élémentaire 20'. Ainsi, il est possible pour l'utilisateur de régler le débit de quantité d'aliments destinée à s'échapper du dispositif 10 lorsque l'animal fait rouler le dispositif 10. Ainsi selon au moins l'un parmi le régime alimentaire de l'animal, le type d'animal, la taille de l'animal, l'âge de l'animal, le poids de l'animal, il est possible de contrôler au mieux la quantité d'aliments sortant du dispositif 10 lors de l'utilisation du dispositif 10 par l'animal. Le dispositif 10 tel que revendiqué permet alors à la fois par le contrôle de la quantité d'aliments sortant du dispositif et par l'obligation de l'animal de faire de l'exercice pour pouvoir libérer les aliments, de maintenir l'animal dans de bonnes conditions de santé.

De manière préférée, la première pluralité d'orifices 11a et la deuxième pluralité d'orifices 12a présentent un nombre suffisamment élevé d'orifices permettant à la première pluralité 11a et à la deuxième pluralité 12a respectivement de s'étendre sur la totalité de la première paroi latérale 112 du manchon interne 11 et de la deuxième paroi latérale 122 du manchon externe 12. Cela permet que la distribution de l'au moins un aliment depuis le volume de stockage 100 vers l'extérieur du dispositif 10 s'effectue de façon homogène, l'au moins un aliment est alors distribué dans toute la longueur et sur toute la circonférence du dispositif 10 selon l'axe longitudinal 1 dans lequel il s'étend.

De manière préférée, les orifices de la pluralité d'orifices 11a, 12a d'au moins un, et de préférence de chaque, manchon sont au moins en partie de forme polygone à au moins cinq coté, de préférence au moins en partie de forme hexagonale. En effet, les aliments pour animaux sont très souvent de forme hexagonale. De manière alternative, les orifices de la pluralité d'orifices d'au moins un, et de préférence de chaque, manchon sont circulaires.

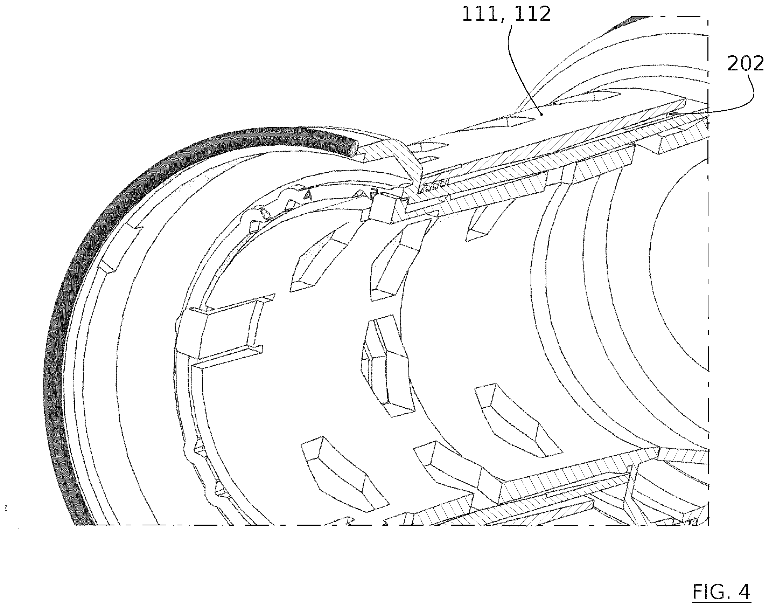

Nous allons à présent décrire le mode de la présente invention Selon ce mode et tel que décrit sur l'ensemble des figures 1 à 4, le dispositif 10 comprend un manchon supplémentaire 13 creux. Ce manchon supplémentaire 13 s'étend, tout comme le manchon interne 11 et le manchon externe 12, le long de l'axe longitudinal 1. Le manchon supplémentaire 13 présente une surface interne 130 et une surface externe 131. La surface externe 131 définit une troisième paroi latérale 132 présentant une troisième pluralité d'orifices 13a.

De manière préférée, toutes les configurations possibles telles que décrites précédemment pour la première pluralité d'orifices 11a et pour la deuxième pluralité d'orifices 12a sont aussi valables pour cette troisième pluralité d'orifices 13a.

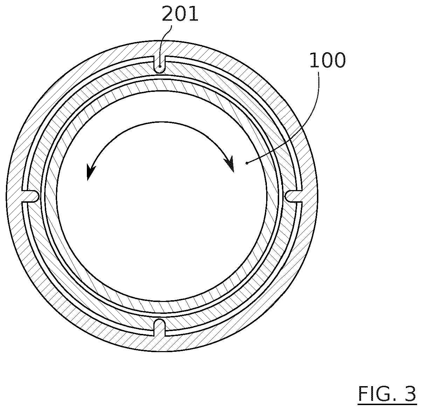

De manière plus qu'avantageuse et tel que représenté sur la figure 3, le manchon supplémentaire 13 est mobile en rotation relativement à au moins l'un parmi le manchon interne 11 et le manchon externe 12. Cette rotation relative engendre la variation d'une surface de recouvrement 20 de la troisième pluralité d'orifices 13a sur la première pluralité d'orifices 11a et/ou la deuxième pluralité d'orifices 12a.

Tel que représenté sur les figures 1 à 4, la présente invention décrit un dispositif 10 dans lequel le manchon interne 11 s'étend le long d'un axe longitudinal 1 au sein du manchon supplémentaire 13 de manière à être coaxial au manchon supplémentaire 13, le manchon supplémentaire 13 s'étend le long d'un axe longitudinal 1 au sein du manchon externe 12 de manière à être coaxial au manchon externe 12. Ainsi l'ordre de disposition des manchons 11, 12, 13 en partant du volume de stockage 100 jusqu'à l'extérieur du dispositif 10 est le suivant : manchon interne 11, manchon supplémentaire 13 et manchon externe 12. Ainsi le manchon supplémentaire 13 est compris entre le manchon interne 11 et le manchon externe 12.

Le manchon externe 12 et le manchon interne 11 présentent toujours une mobilité relative laquelle comprend une translation le long de l'axe longitudinal 1. Le manchon supplémentaire 13 et le manchon externe 12 présentent une mobilité relative. Le manchon supplémentaire 13 et le manchon interne 11 présentent aussi une mobilité relative.

La figure 3 représente une vue en coupe d'un mode de réalisation de la présente invention. Elle y décrit que le dispositif présente un élément de guidage en rotation 201. Cet élément de guidage en rotation 201 présente un assemblage mâle femelle, dans lequel l'élément mâle est disposé sur l'une parmi la surface externe 111 du manchon interne 11 ou la surface interne 130 du manchon supplémentaire 13 ; l'élément femelle est disposé sur l'autre surface. Ainsi, l'utilisateur peut par le biais de ses mains, effectuer une rotation relative manuelle d'un manchon par rapport à l'autre. Tout autre moyen d'élément de guidage de la rotation entre dans le cadre de la présente invention.

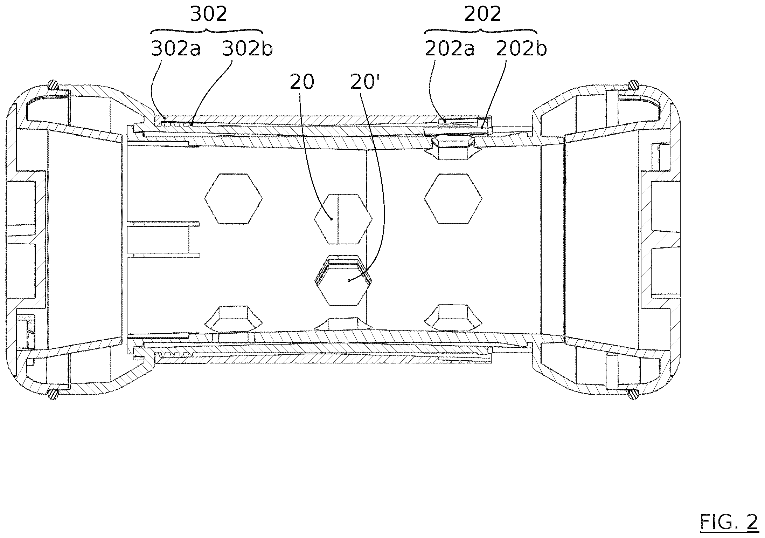

La figure 2 décrit aussi que le dispositif 10 présente un élément de guidage de la translation 202. Selon un exemple préféré mais non limitatif, l'élément de guidage de la translation 202 comprend une lumière 202a disposée sur la paroi latérale 132 du manchon supplémentaire 13, et une encoche 202b disposée sur la surface interne 120 du manchon externe 12, l'encoche 202b peut alors se déplacer librement dans la lumière 202a. Une disposition inversée de la lumière 202a et de l'encoche 202b est aussi possible. Cela permet à l'utilisateur d'être guidé facilement dans la translation du manchon externe 12 par rapport au manchon supplémentaire 13 et par conséquent dans la translation relative du manchon externe 12 et manchon interne 11. Ainsi il est facile pour l'utilisateur d'exercer une contrainte en translation sur la surface externe 121 du manchon externe 12, aucun élément ne s'oppose à cette contrainte que l'utilisateur exerce. Le manchon externe 12 sera alors immobilisé lorsque l'encoche 202b atteint l'extrémité de la lumière 202a. Tout autre moyen d'élément de guidage de la translation entre dans le cadre de la présente invention. Ces éléments de guidage en rotation et en translation guident l'un parmi les trois manchons sur l'un parmi les autres manchons.

Dans le cas alternatif et non représenté sur la figure 2, où l'encoche 202b est située sur la surface externe 131 du manchon supplémentaire 13 et la lumière 202a est située sur la paroi latérale 122 du manchon externe 12, c'est le manchon supplémentaire 13 qui est guidé en translation selon l'axe longitudinal 1 par l'utilisateur. Ainsi il suffit à l'utilisateur de pousser l'encoche 202b pour autoriser le mouvement du manchon supplémentaire 13 selon l'axe longitudinal 1.

Selon un exemple non couvert par l'invention dans lequel le manchon supplémentaire 13 n'est pas présent, la lumière 202a de l'élément de guidage en translation 202 est disposée sur la paroi latérale 112 du manchon interne 11, et l'encoche 202b est disposée sur la surface interne 120 du manchon externe 12. Dans ce cas, c'est le manchon externe 12 qui translate par rapport au manchon interne 11. Dans un cas alternatif, la lumière 202a de l'élément de guidage en translation 202 est disposée sur la paroi latérale 112 du manchon externe 12, et l'encoche 202b est disposée sur la surface externe 111 du manchon interne 11 de telle manière à ce que l'utilisateur puisse avoir accès à cette encoche 202b afin d'autoriser le mouvement translatif du manchon supplémentaire 13 par rapport au manchon externe 12.

Selon l'invention, afin de pouvoir verrouiller la position relative du manchon externe 12 et du manchon interne 11 en translation, le dispositif 10 présente un élément de verrouillage de la translation 302 dans au moins deux positions relatives différentes du manchon interne 11 et du manchon externe 12.

Pour cela, dans le cas où le dispositif comprend seulement deux manchons, l'élément de verrouillage 302 présente une accroche 302a sur l'un parmi le manchon externe 12 et le manchon interne 11 et une pluralité de crans 302b sur l'autre de telle manière à ce que le manchon externe 12 soit fixé sur le manchon interne 11 dans une position immobile par le biais de la coopération entre l'accroche 302a et un cran de la pluralité de crans 302b.

Le verrouillage de la translation 302 s'effectue dans au moins deux positions relatives différentes du manchon supplémentaire 13 et du manchon externe 12. Il en découle que l'élément de verrouillage 302 présente une accroche 302a sur l'un parmi le manchon externe 12 et le manchon supplémentaire 13 et une pluralité de crans 302b sur l'autre de telle manière à ce que le manchon externe 12 soit fixé sur le manchon supplémentaire 13 dans une position immobile par le biais de la coopération entre l'accroche 302a et un cran de la pluralité de crans 302b. Ainsi, il est facile pour l'utilisateur de s'assurer que le manchon externe 12 est bien fixé dans une position immobile sur l'un parmi le manchon interne 11 ou le manchon supplémentaire 13. L'utilisateur choisit alors la position qu'il souhaite avant l'utilisation du dispositif 10 par l'animal, il s'assure de son verrouillage par l'élément de verrouillage 302. Ainsi, lors de l'utilisation du dispositif 10 par l'animal, le réglage des positions relatives des manchons choisies par l'utilisateur est verrouillé et fixe. Les coups et mouvements que peut donner l'animal sur le dispositif 10 en jouant avec celui-ci ne perturbent pas le réglage du dispositif 10. De plus, les éventuels frottements et/ou chocs entre le dispositif 10 et le sol ne perturbent pas non plus le réglage du dispositif 10. Ainsi, la présente invention propose un dispositif 10 de distribution d'aliments aux animaux fiable et robuste.

La présente invention décrit aussi un procédé de réglage de la surface de recouvrement 20 du dispositif 10. Le procédé de réglage comprend successivement une étape de translation relative du manchon interne 11 et du manchon externe 12 le long de l'axe longitudinal 1 de sorte à atteindre une position correspondant à un niveau souhaité de surface de recouvrement 20, une étape d'immobilisation du manchon externe 12 dans ladite position.

Optionnellement, il est possible d'ajouter au procédé de réglage une étape additionnelle de rotation relative d'un manchon supplémentaire 13 et de l'un parmi le manchon interne 11 et le manchon externe 12, de préférence le manchon interne 11. Ainsi on fait varier une surface de recouvrement 20 de la troisième pluralité d'orifices 13a sur la première pluralité d'orifices 11a et/ou la deuxième pluralité d'orifices 12a.

De manière avantageuse, la surface de passage 20' entre le volume de stockage 100 et l'extérieur du dispositif 10 est définie par la combinaison de la rotation du manchon supplémentaire 13 autour de l'un parmi le manchon externe 12 et le manchon interne 11 et de la translation selon l'axe longitudinal 1 de l'un parmi le manchon externe 12 et le manchon interne 11.

Une utilisation du dispositif tel que décrit selon les diverses modes de réalisation, peut comprendre au moins un aliment dans le volume de stockage 100 du manchon interne 11 dans lequel l'animal exerce un effort sur le dispositif 10, lequel roule autour d'un axe de révolution étant coaxial à l'axe longitudinal 1 de telle manière à libérer l'au moins un aliment contenu dans le volume de stockage 100 du manchon interne 11 par le biais de la surface de passage 20'. Ainsi l'animal effectue une activité physique pour libérer l'au moins un aliment, et peut alors se nourrir, les aliments libérés étant alors disposés sur le sol.

Dans le cas non couvert par l'invention où le dispositif comprend seulement le manchon interne 11 et le manchon externe 12, tous les modes de réalisations tels que décrits sont valables.

Par ailleurs, comme représenté sur l'ensemble des figures 1 à 4, le dispositif 1 peut présenter deux roues situées aux extrémités des manchons 11, 12, 13 et étant configurées de sorte à ce que au moins une partie de ces roues épouse les extrémités des manchons 11, 12, 13.

De manière préférée, au moins une des deux roues est amovible du dispositif 10. Cela permet d'insérer l'au moins un aliment par l'ouverture dégagée lorsque l'on retire au moins une des deux roues. De manière préférée, au moins une des deux roues comprend un bouchon pouvant être vissé et dévissé dans la roue et lorsqu'il est dévissé, autorise un passage entre l'extérieur du dispositif 10 et le volume de stockage 100. Cela permet d'insérer facilement l'au moins un aliment au sein du volume de stockage 100 sans avoir à dévisser la roue.

De manière plus qu'avantageuse, les deux roues sont configurées de telle manière à ce qu'elles présentent une hauteur n'autorisant aucun contact entre la surface externe 122 du manchon externe 12 et le sol. Ainsi, le dispositif 10 roule facilement sur le sol seulement par le biais de deux roues.

Les modes de réalisation concernant la présence de roues sur le dispositif 10 sont combinables avec tous les modes de réalisations tels que décrit précédemment, que ce soit ceux présentant un dispositif 10 comprenant deux manchons 11, 12 ou ceux présentant un dispositif comprenant trois manchons 11, 12, 13.

L'invention est principalement destinée à être utilisée par les chats mais peut également être utilisée par d'autres animaux, de préférence des animaux de petite taille, comme par exemple, les chiots, les chiens de petite taille, les furets etc.

De manière plus qu'avantageuse, dans tous les modes de réalisation tels que décrits précédemment les manchons 11, 12, 13 sont tous de même forme, de préférence sont de forme cylindrique. De manière alternative, les manchons 11, 12, 13 sont de forme rectangulaire.

De manière préférée, le dispositif 10 est constitué principalement de matériaux plastiques notamment les manchons sont constitués de matériaux plastiques. De manière alternative, le dispositif 10 est utilisé pour des animaux de plus grande taille, le dispositif 10 peut être constitué de matériaux plus résistants que le plastique, tels que le fer ou l'aluminium.

L'invention n'est pas limitée aux modes de réalisations précédemment décrits et s'étend à tous les modes de réalisation couverts par les revendications.

### Liste des références

1. Axe longitudinal
10. Dispositif
100. Volume de stockage
11. Manchon interne
110. Surface interne
111. Surface externe
112. Première paroi latérale
11a. Première pluralité d'orifices débouchant
12. Manchon externe
120. Surface interne
121. Surface externe
122. Deuxième paroi latérale
12a. Deuxième pluralité d'orifices débouchant
13. Manchon supplémentaire
130. Surface interne
131. Surface externe
132. Paroi latérale
13a. Troisième pluralité d'orifices débouchant
20. Surface de recouvrement
20'. Surface de passage
201. Elément de guidage en rotation
202. Elément de guidage de la translation
202a. Lumière
202b. Encoche
302. Elément de verrouillage de la translation
302a. Accroche
302b. Pluralité de crans

## Revendications

1. Dispositif (10) pour distribuer au moins un aliment aux animaux comprenant :
- un manchon interne (11) creux présentant :
• une surface interne (110), laquelle délimite un volume de stockage, configuré pour recevoir au moins un aliment,
• une surface externe (111), laquelle définit une première paroi latérale (112) présentant une première pluralité d'orifices débouchant (11a) dans le volume de stockage (100),
- un manchon externe (12) creux présentant :
• une surface interne (120),
• une surface externe (121), laquelle définit une deuxième paroi latérale (122) présentant une deuxième pluralité d'orifices (12a),
dans lequel le manchon interne s'étend le long d'un axe longitudinal (1) au sein du manchon externe de manière à être coaxial au manchon externe (12),
et dans lequel le manchon externe (12) et le manchon interne (11) présentent une mobilité relative configurée pour définir une surface de recouvrement (20) variable de la deuxième pluralité d'orifices (12a) sur la première pluralité d'orifices (11a), dans lequel la variation de ladite surface de recouvrement (20) engendrant une surface de passage (20') variable entre le volume de stockage (100) et l'extérieur du dispositif,
dans lequel la mobilité relative comprend une translation le long de l'axe longitudinal (1),
le dispositif comprenant un manchon supplémentaire (13) creux, s'étendant le long de l'axe longitudinal (1) et présentant une surface interne (130) et une surface externe (131), ladite surface externe (131) définissant une troisième paroi latérale (132) présentant une troisième pluralité d'orifices (13a), et dans lequel le manchon supplémentaire (13) est mobile en rotation relativement à au moins l'un parmi le manchon interne (11) et le manchon externe (12) de telle manière à faire varier une surface de recouvrement (20) de la troisième pluralité d'orifices (13a) sur la première pluralité d'orifices (11a) et/ou la deuxième pluralité d'orifices (12a),
le dispositif étant **caractérisé en ce que** :
- le manchon interne (11) s'étend le long de l'axe longitudinal (1) au sein du manchon supplémentaire (13) de manière à être coaxial au manchon supplémentaire (13),
- le manchon supplémentaire (13) s'étend le long de l'axe longitudinal (1) au sein du manchon externe (12) de manière à être coaxial au manchon externe (12) de telle manière à ce que l'ordre de disposition des manchons (11, 12, 13) en partant du volume de stockage (100) jusqu'à l'extérieur du dispositif est le suivant : manchon interne (11), manchon supplémentaire (13) et manchon externe (12),
le dispositif présentant en outre un élément de verrouillage de la translation (302) dans au moins deux positions relatives différentes du manchon interne (11) et du manchon externe (12).

2. Dispositif (10) selon la revendication précédente, lequel présente un élément de guidage en rotation (201) et un élément de guidage de la translation (202).

3. Dispositif (10) selon la revendication précédente, dans lequel l'élément de guidage de la translation (202) comprend une lumière (202a) disposée sur l'un parmi le manchon externe (12) et le manchon supplémentaire (13), et une encoche (202b) disposée sur l'autre de telle manière à ce que l'encoche (202b) soit destinée à se déplacer librement dans la lumière (202a).

4. Dispositif (10) selon l'une quelconque des revendications précédentes, dans lequel les orifices de la pluralité d'orifices (11a, 12a, 13a) d'au moins un, et de préférence de chaque, manchon sont au moins en partie de forme hexagonale.

5. Dispositif (10) selon l'une quelconque des revendications précédentes, dans lequel l'élément de verrouillage (302) présente une accroche (302a) sur l'un parmi le manchon externe (12) et le manchon supplémentaire (13) et une pluralité de crans (302b) sur l'autre de telle manière à ce que le manchon externe (12) soit fixé sur le manchon supplémentaire (13) dans une position immobile par le biais de la coopération entre l'accroche (302a) et un cran de la pluralité de crans (302b).

6. Procédé de réglage de la surface de recouvrement (20) du dispositif (10) selon l'une quelconque des revendications précédentes, comprenant successivement au moins les étapes suivantes :
- translation relative du manchon interne (11) et du manchon externe (12) le long de l'axe longitudinal (1) de sorte à atteindre une position correspondant à un niveau souhaité de surface de recouvrement (20),
- immobilisation du manchon externe (12) dans ladite position.

7. Procédé selon la revendication précédente, comprenant une étape additionnelle de rotation relative du manchon supplémentaire (13) et de l'un parmi le manchon interne (11) et le manchon externe (12) de telle manière à faire varier une surface de recouvrement (20) de la troisième pluralité d'orifices (13a) sur la première pluralité d'orifices (11a) et/ou la deuxième pluralité d'orifices (12a).

8. Procédé selon la revendication précédente, dans lequel la surface de passage (20') entre le volume de stockage (100) et l'extérieur du dispositif (10) est définie par la combinaison de la rotation relative du manchon supplémentaire (13) et de l'un parmi le manchon externe (12) et le manchon interne (11) et de la translation relative selon l'axe longitudinal (1) du manchon externe (12) et du manchon interne (11).

## Patentansprüche

1. Vorrichtung (10) zum Verteilen von wenigstens einem Nahrungsmittel an Tiere, Folgendes umfassend:
- eine hohle innere Hülse (11), die Folgendes aufweist:
• eine innere Oberfläche (110), die ein Speichervolumen begrenzt, das konfiguriert ist, um wenigstens ein Nahrungsmittel aufzunehmen,
• eine äußere Oberfläche (111), die eine erste seitliche Wand (112) definiert, die eine erste Vielzahl an Öffnungen aufweist, die in das Speichervolumen (100) münden (11a),
- eine hohle äußere Hülse (12), die Folgendes aufweist:
• eine innere Oberfläche (120),
• eine äußere Oberfläche (121), die eine zweite seitliche Wand (122) definiert, die eine zweite Vielzahl von Öffnungen (12a) aufweist,
wobei sich die innere Hülse entlang einer längsseitigen Achse (1) innerhalb der äußeren Hülse erstreckt, solcherart, dass sie koaxial mit der äußeren Hülse (12) ist,
und wobei die äußere Hülse (12) und die innere Hülse (11) eine relative Mobilität aufweisen, die konfiguriert ist, um eine variable Fläche zur Abdeckung (20) der zweiten Vielzahl von Öffnungen (12a) auf der ersten Vielzahl von Öffnungen (11a) zu definieren, wobei die Variation der Deckfläche (20) eine variable Durchgangsfläche (20') zwischen dem Speichervolumen (100) und dem Äußeren der Vorrichtung erzeugt,
wobei die relative Mobilität eine Übersetzung entlang der längsseitigen Achse (1) umfasst,
wobei die Vorrichtung eine zusätzliche hohle Hülse (13) umfasst, die sich entlang der längsseitigen Achse (1) erstreckt und eine innere Oberfläche (130) und eine äußere Oberfläche (131) aufweist, wobei die äußere Oberfläche (131) eine dritte seitliche Wand (132) definiert, die eine dritte Vielzahl von Öffnungen (13a) aufweist, und wobei die zusätzliche Hülse (13) rotierend beweglich ist relativ zu wenigstens einem von der inneren Hülse (11) und der äußeren Hülse (12), solcherart, dass eine Deckfläche (20) der dritten Vielzahl von Öffnungen (13a) auf der ersten Vielzahl von Öffnungen (11a) und/oder der zweiten Vielzahl von Öffnungen (12a) variiert wird,
wobei die Vorrichtung **dadurch gekennzeichnet ist, dass**:
- sich die innere Hülse (11) entlang der längsseitigen Achse (1) innerhalb der zusätzlichen Hülse (13) erstreckt, solcherart, dass sie koaxial mit der zusätzlichen Hülse (13) ist,
- sich die zusätzliche Hülse (13) entlang der längsseitigen Achse (1) innerhalb der äußeren Hülse (12) erstreckt, solcherart, dass die koaxial mit der äußeren Hülse (12) ist,
solcherart, dass die Reihenfolge der Anordnung der Hülsen (11, 12, 13) beginnend bei dem Speichervolumen (100) bis zu dem Äußeren der Vorrichtung folgendermaßen beschaffen ist: innere Hülse (11), zusätzliche Hülse (13) und äußere Hülse (12),
wobei die Vorrichtung weiter ein Element zur Verriegelung der Übersetzung (302) in wenigstens zwei relativen Positionen aufweist, die sich von der inneren Hülse (11) und der äußeren Hülse (12) unterscheiden.

2. Vorrichtung (10) nach dem vorhergehenden Anspruch, die ein Element zur Rotationsführung (201) und ein Element zur Übersetzungsführung (202) aufweist.

3. Vorrichtung (10) nach dem vorhergehenden Anspruch, wobei das Element zur Übersetzungsführung (202) ein Licht (202a) umfasst, das auf einem von der äußeren Hülse (12) und der zusätzlichen Hülse (13) angeordnet, ist, und eine Aussparung (202b), die auf dem anderen angeordnet ist, solcherart, dass die Aussparung (202b) dafür vorgesehen ist, sich frei in dem Licht (202a) zu deplatzieren.

4. Vorrichtung (10) nach einem der vorhergehenden Ansprüche, wobei die Öffnungen aus der Vielzahl der Öffnungen (11a, 12a, 13a) von wenigstens einer und bevorzugt von jeder Hülse wenigstens teilweise von sechseckiger Form sind.

5. Vorrichtung (10) nach einem der vorhergehenden Ansprüche, wobei das Verriegelungselement (302) einen Haken (302a) an einer von der äußeren Hülse (12) und der zusätzlichen Hülse (13) und eine Vielzahl von Kerben (302b) an der anderen aufweist, so dass die äußere Hülse (12) an der zusätzlichen Hülse (13) durch das Zusammenwirken zwischen dem Haken (302a) und einer Kerbe aus der Vielzahl von Kerben (302b) in einer unbeweglichen Position gesichert ist.

6. Verfahren zur Einstellung der Deckfläche (20) der Vorrichtung (10) nach einem der vorhergehenden Ansprüche, aufeinanderfolgend die folgenden Schritte umfassend:
- relative Übersetzung der inneren Hülse (11) und der äußeren Hülse (12) entlang der längsseitigen Achse (1), solchererat, dass eine Position erreicht wird, die einem gewünschten Niveau der Deckfläche (20) entspricht,
- Immobilisierung der äußeren Hülse (12) in der Position.

7. Verfahren nach dem vorhergehenden Anspruch, umfassend einen zusätzlichen Schritt der relativen Rotation der zusätzlichen Hülse (13) und einem von der inneren Hülse (11) und der äußeren Hülse (12), solcherart, dass eine Deckfläche (20) der dritten Vielzahl von Öffnungen (13a) auf der ersten Vielzahl von Öffnungen (11a) und/oder der zweiten Vielzahl von Öffnungen (12a) variiert wird.

8. Verfahren nach dem vorhergehenden Anspruch, wobei die Durchgangsfläche (20') zwischen dem Speichervolumen (100) und dem Äußeren der Vorrichtung (10) definiert wird von der Kombination der relativen Rotation der zusätzlichen Hülse (13) und einem von der äußeren Hülse (12) und der inneren Hülse (11) und der relativen Übersetzung gemäß der längsseitigen Achse (1) der äußeren Hülse (12) und der inneren Hülse (11).

## Claims

1. A device (10) for dispensing at least one food item to animals comprising:
- an inner hollow sleeve (11) having:
• an inner surface (110), which delimits a storage volume, configured to receive at least one food item,
• an outer surface (111), which defines a first side wall (112) having a first plurality of open-ended holes (11a) in the storage volume (100),
- an outer hollow sleeve (12) having:
• an inner surface (120),
• an outer surface (121), which defines a second side wall (122) having a second plurality of holes (12a),
wherein the inner sleeve extends along a longitudinal axis (1) within the outer sleeve so as to be coaxial to the outer sleeve (12),
and wherein the outer sleeve (12) and the inner sleeve (11) have a relative mobility configured to define a variable overlap surface (20) of the second plurality of holes (12a) over the first plurality of holes (11a), wherein the variation of said overlap surface (20) generates a variable passage surface (20') between the storage volume (100) and the outside of the device,
wherein the relative mobility comprises a translation along the longitudinal axis (1),
the device comprising an additional hollow sleeve (13), extending along the longitudinal axis (1) and having an inner surface (130) and an outer surface (131), said outer surface (131) defining a third sidewall (132) having a third plurality of holes (13a), and wherein the additional sleeve (13) is rotatably movable relative to at least one of the inner sleeve (11) and the outer sleeve (12) so as to vary an overlap surface (20) of the third plurality of holes (13a) over first plurality of holes (11a) and/or the second plurality of holes (12a),
the device being **characterised in that**:
- the inner sleeve (11) extends along the longitudinal axis (1) within the additional sleeve (13) so as to be coaxial to the additional sleeve (13),
- the additional sleeve (13) extends along the longitudinal axis (1) within the outer sleeve (12) so as to be coaxial to the outer sleeve (12) so that the arrangement order of the sleeves (11, 12, 13) starting from the storage volume (100) to the outside of the device is as follows: inner sleeve (11), additional sleeve (13) and outer sleeve (12),
the device further having a translation locking element (302) in at least two different relative positions of the inner sleeve (11) and the outer sleeve (12).

2. The device (10) according to the preceding claim, which has a rotation guide element (201) and a translation guide element (202).

3. The device (10) according to the preceding claim, wherein the translation guide element (202) comprises a port (202a) arranged on one of the outer sleeve (12) and the additional sleeve (13), and a notch (202b) arranged on the other so that the notch (202b) is to move freely in the port (202a).

4. The device (10) according to any of the preceding claims, wherein the holes of the plurality of holes (11a, 12a, 13a) of at least one, and preferably of each, sleeve are at least partly of hexagonal shape.

5. The device (10) according to any of the preceding claims, wherein the locking element (302) has a hook (302a) on one of the outer sleeve (12) and the additional sleeve (13) and a plurality of steps (302b) on the other so that the outer sleeve (12) is attached to the additional sleeve (13) in a fixed position through the cooperation between the hook (302a) and a step of the plurality of steps (302b).

6. A method for adjusting the overlap surface (20) of the device (10) according to any of the preceding claims, successively comprising at least the following steps:
- relatively translating the inner sleeve (11) and the outer sleeve (12) along the longitudinal axis (1) so as to reach a position corresponding to a desired level of the overlap surface (20),
- fixing the outer sleeve (12) in said position.

7. The method according to the preceding claim, comprising an additional step of relatively rotating the additional sleeve (13) and one of the inner sleeve (11) and the outer sleeve (12) so as to vary an overlap surface (20) of the third plurality of holes (13a) over the first plurality of holes (11a) and/or the second plurality of holes (12a).

8. The method according to the preceding claim, wherein the passage surface (20') between the storage volume (100) and the outside of the device (10) is defined by the combination of relatively rotating the additional sleeve (13) and one of the outer sleeve (12) and the inner sleeve (11) and relatively translating the outer sleeve (12) and the inner sleeve (11) along the longitudinal axis (1).
